# EUROPEAN PATENT SPECIFICATION

(11) **EP 3 582 169 B1**
(45) Date of publication and mention of the grant of the patent: **06.11.2024**
(21) Application number: 17771653.7
(22) Date of filing: 09.06.2017
(51) Int. Cl.: G06Q 30/06, G06Q 30/02, A47B 96/02, A47F 5/025, A47F 7/00, G06Q 30/0601

(54) **COMMODITY EXPERIENCING APPARATUS, SYSTEM AND METHOD**
WARENERLEBNISVORRICHTUNG, -SYSTEM UND -VERFAHREN
APPAREIL, SYSTÈME ET PROCÉDÉ DE PRÉSENTATION DE MARCHANDISES

(30) Priority: 13.02.2017 CN 201710077532
(43) Date of publication of application: 18.12.2019
(73) Proprietor: JIANGSU BBL HOME TECHNOLOGY COMPANY LIMITED, Changzhou City, Jiangsu Province 213101 (CN)
(72) Inventor: ZHANG, Xiaoling, Changzhou, Jiangsu 213101 (CN)
(74) Representative: Anohins, Vladimirs
(86) International application number: PCT/CN2017/087775
(87) International publication number: WO 2018/145380

(56) References cited:
- EP-A1- 1 834 550
- EP-A1- 3 062 281
- CN-A- 103 735 091
- CN-A- 105 534 182
- CN-A- 106 600 390
- CN-U- 205 831 560
- GB-A- 2 344 671
- US-A- 5 979 757
- US-A1- 2003 172 563
- US-A1- 2015 105 901

## Description

### Technical Field

The present invention relates to the field of user experience, and particularly to a commodity experience apparatus, system and method.

### Background Art

Online shopping is an extremely convenient shopping manner. With the improvement of living standard and rapid development of network, online shopping has gradually become a consumption pattern for people. Online shopping has many advantages, such as convenient operation, cheap price and a large amount of information. Meanwhile, online shopping also has many shortcomings, for example, it is impossible to provide virtual experience of commodities, samples cannot be seen at any time, and it is unavoidable that the commodity shopped online is not in line with a real commodity. Various commodity experience apparatuses, methods and systems are known, for example, from documents GB2344671A, US5979757A, US2015/105901 A1, EP3062281 A1, CN205831560U, CN103735091A, CN105534182A, US2003/172563A1, EP1834550A1.

### Disclosure of the Invention

In view of this, an object of the present invention is to provide a commodity experience device and system to solve the above problems.

The invention is as defined in the appended claims.

An embodiment of the present invention provides a commodity experience device, which includes an electronic display device and a commodity show shelf. The electronic display device is arranged on the commodity show shelf.

The electronic display device includes a device main body, a display screen and a scanning device, with the display screen and the scanning device arranged on the device main body.

The commodity show shelf includes a base, a show shelf main body, a supporting frame, a top cover, and a storage shelf, with the show shelf main body and the storage shelf arranged on the base, and the supporting frame arranged on the show shelf main body.

The device main body is arranged on the base. The supporting frame is configured to support a displayed commodities, each of displayed commodities is provided with a commodity identifier. The storage shelf is configured for placement of VR glasses as well as textual and graphic files of the displayed commodity. The display screen is configured to display commodity information of the displayed commodities by logging in an e-commerce platform system. The scanning device is configured to scan the commodity identifiers of the displayed commodities.

Furthermore, the show shelf main body includes a first cross rod and a second cross rod arranged opposite to each other, and a plurality of upright rods connected between the first cross rod and the second cross rod, wherein the first cross rod is arranged on the base and the second cross rod is arranged on the top cover at a position corresponding to a position where the first cross rod is provided on the base.

The supporting frame includes sleeves and a plurality of clamping rods arranged on the sleeves. Each of the clamping rods is provided thereon with two clamping grooves, and the two clamping grooves are opened in opposite direction and in a length direction of the sleeve, the openings of the clamping grooves of two adjacent clamping rods on the same upright rod face to each other, forming a space for clamping one of the displayed commodities.

The sleeves, corresponding one to one to the upright rods, are rotatably sleeved onto the upright rods, such that a spacing distance between the displayed commodities can be adjusted by rotating the sleeves.

Furthermore, the commodity experience apparatus is in communication with a customer service center, and the electronic display device further includes a voice communication device, with the voice communication device arranged on the device main body.

The voice communication device is configured to realize real-time communication between a user and an online service agent.

Furthermore, the electronic display device further includes a camera, with the camera arranged on the device main body.

The camera is configured to realize the real-time communication between the user and the online service agent.

Furthermore, the display screen is arranged at an upper-middle portion of the device main body, the scanning device is arranged at a lower-middle portion of the device main body, the voice communication device is arranged at the upper-middle portion of the device main body and located at one side of the display screen, and the camera is arranged at an upper portion of the device main body.

The display screen, the scanning device, the camera and the voice communication device are all arranged at a same side of the device main body.

Furthermore, the commodity show shelf further includes a show board configured for placement of the displayed commodity, and the show board is clamped in the clamping grooves provided on adjacent two of the clamping rods.

Furthermore, one end of the clamping rod is arranged on the sleeve, and the other end of the clamping rod extends in a direction perpendicular to the length direction of the sleeve.

Furthermore, the commodity identifier of the displayed commodity is a quick response (QR) code, the QR code includes a purchase link QR code and a virtual reality video link QR code, and the scanning device is a QR code scanner.

Furthermore, the commodity experience apparatus is in communication with the e-commerce platform system. The scanning device is configured to scan the purchase link QR code to obtain a purchase link, and the commodity experience apparatus logs in the e-commerce platform system according to the purchase link, and displays, through the display screen, commodity information of the displayed commodity with the commodity information provided by the e-commerce platform system.

Another object of the present invention is to provide a commodity experience system, which includes a mobile terminal, an e-commerce platform system and the commodity experience device provided in the present invention. The mobile terminal and the commodity experience device each are in communication with the e-commerce platform system.

The mobile terminal is configured to scan the commodity identifier of the displayed commodity to acquire a purchase link or a virtual reality video link of the displayed commodity.

The e-commerce platform system is configured to store the commodity information of the displayed commodity, and is further configured to process relevant information such as ordering information.

Furthermore, the commodity experience system further includes a customer service center, with the customer service center being in communication with the commodity experience apparatus, the mobile terminal and the e-commerce platform system.

The customer service center is configured to realize real-time communication between a user and an online service agent.

Another object of the present invention is to provide a commodity experience device, which includes an electronic display device and a commodity show shelf.

The commodity show shelf is provided thereon with at least one removable displayed commodity, with the displayed commodity provided thereon with a commodity identifier.

The electronic display device includes a display screen and a scanning device. The commodity experience apparatus is in communication with an e-commerce platform system. The scanning device is configured to scan the commodity identifier of the displayed commodity to obtain a purchase link, and the commodity experience apparatus logs in the e-commerce platform system according to the purchase link, and displays, through the display screen, commodity information of the displayed commodity.

Furthermore, the electronic display device further includes VR glasses. The scanning device is configured to scan the commodity identifier of the displayed commodity to obtain a virtual reality video link. The commodity experience apparatus obtains a virtual reality display effect of the displayed commodity according to the virtual reality video link, and displays the virtual reality display effect through the virtual reality glasses.

Furthermore, the electronic display device is further configured to receive a user operation for logging in the e-commerce platform system, and display, through the display screen, commodity information of a commodity chosen by a user.

Furthermore, the commodity experience apparatus is in communication with a customer service center. The electronic display device further includes a voice communication device, and the voice communication device is configured to perform voice interaction with the customer service center, to enable the user to communicate with an online service agent in real time.

Furthermore, the commodity experience apparatus is in communication with the customer service center. The electronic display device further includes a camera, and the camera is configured to perform image or video interaction with the customer service center, to enable the user to communicate with the online service agent in real time.

Furthermore, the electronic display device includes a device main body, with the display screen and the scanning device arranged on the device main body.

Furthermore, the commodity show shelf includes a base, a show shelf main body and a supporting frame. The show shelf main body is arranged on the base, the supporting frame is arranged on the show shelf main body, and the at least one displayed commodity is arranged on the supporting frame.

Furthermore, the show shelf main body includes a first cross rod and a second cross rod arranged opposite to each other, and a plurality of upright rods connected between the first cross rod and the second cross rod.

The supporting frame includes sleeves and a plurality of clamping rods arranged on the sleeves. The sleeves are rotatably sleeved onto the upright rods. The clamping rod is provided thereon with clamping grooves, and openings of the clamping grooves of two adjacent clamping rods on a same upright rod face to each other, forming a space for clamping the displayed commodity.

Another object of the present invention is to provide a commodity experience method, applicable to a commodity experience apparatus. The commodity experience apparatus includes an electronic display device and a commodity show shelf. The electronic display device includes a display screen and a scanning device. The commodity show shelf is provided thereon with at least one displayed commodity which is provided with a commodity identifier. The commodity experience apparatus is in communication with an e-commerce platform system. The method includes:
obtaining a purchase link by the scanning device scanning the commodity identifier of the displayed commodity; and
logging in the e-commerce platform system according to the purchase link, and displaying, through the display screen, commodity information of the displayed commodity with the commodity information provided by the e-commerce platform system.

Furthermore, the commodity experience apparatus further includes virtual reality glasses, and the method further includes:
obtaining a virtual reality video link by the scanning device scanning the commodity identifier of the displayed commodity; and
acquiring a virtual reality display image of the displayed commodity according to the virtual reality video link, and displaying the virtual reality display image through the virtual reality glasses.

Furthermore, the electronic display device is further configured to receive a user operation for logging in the e-commerce platform system, and display, through the display screen, the commodity information of a commodity chosen by the user.

Furthermore, the commodity experience apparatus further includes a voice communication device, and the commodity experience apparatus is in communication with a customer service center. The method further includes:
realizing voice interaction with the customer service center, via the voice communication device.

Furthermore, the commodity experience apparatus further includes a camera, and the method further includes:
realizing image interaction with the customer service center, via the camera and/or the display screen.

The commodity experience apparatus and system provided by the embodiments of the present invention not only provide numerous commodity information and a convenient shopping channel for the users, but also can assist the users in obtaining the virtual experience of commodities and enable the users to see samples at any time, and meanwhile, avoid the case that the commodity shopped online is not in line with the real commodity.

### Brief Description of Drawings

In order to more clearly illustrate technical solutions of embodiments of the present invention, figures which are needed for description of the embodiments will be introduced briefly below. It should be understood that the figures below merely show some embodiments of the present invention, and therefore should not be considered as limiting the scope. A person ordinarily skilled in the art still can obtain other relevant figures according to these figures, without paying inventive effort.
Fig. 1 is a structural schematic diagram of a commodity experience apparatus provided by an embodiment of the present invention.
Fig. 2 is a structural schematic diagram of an electronic display device provided by an embodiment of the present invention.
Fig. 3 is a structural schematic diagram of a commodity show shelf provided by an embodiment of the present invention.
Fig. 4 is another structural schematic diagram of the commodity show shelf provided by the embodiment of the present invention.
Fig. 5 is a structural schematic diagram of a supporting frame provided by an embodiment of the present invention.
Fig. 6 is a partial enlarged view of part A in Fig. 5.
Fig. 7 is a structural schematic diagram of a show board provided by an embodiment of the present invention.
Fig. 8 is another structural schematic diagram of the commodity show shelf provided by the embodiment of the present invention.
Fig. 9 is a connection block diagram of a commodity experience system provided by an embodiment of the present invention.

Reference signs: 10-commodity experience apparatus; 100-electronic display device; 110-device main body; 111-device base; 112-transition part; 113-display part; 120-display screen; 130-scanning device; 140-voice communication device; 150-camera; 200-commodity show shelf; 210-base; 220-show shelf main body; 221-first cross rod; 222-second cross rod; 223-upright rod; 230-supporting frame; 231-sleeve; 232-clamping rod; 2321-clamping groove; 240-storage shelf; 241-storage basket; 250-top cover; 260-show board; 261-pulling hole; 20-mobile terminal; 30-e-commerce platform system; and 40-customer service center.

### Detailed Description of Embodiments

Below the technical solutions of the embodiments of the present invention will be described clearly and completely in conjunction with figures of the embodiments of the present invention.

It should be noted that similar reference signs and letters represent similar items in the following figures, and therefore, once a certain item is defined in one figure, it is not needed to be further defined or explained in subsequent figures.

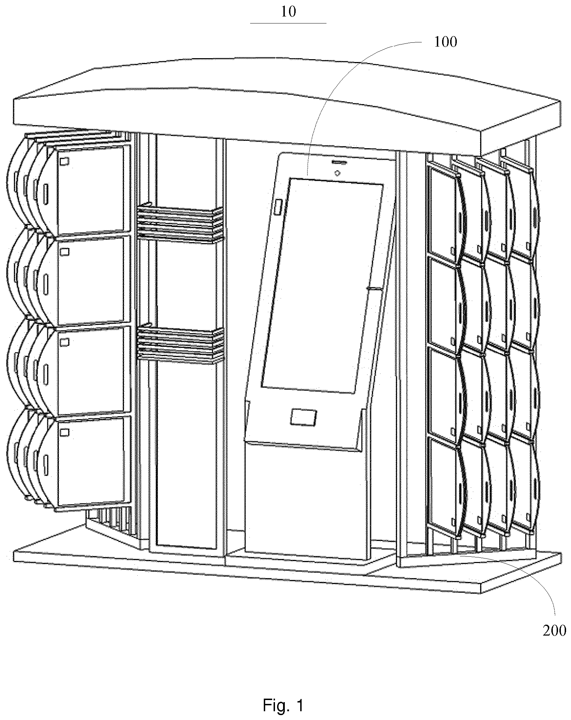

Referring to Fig. 1, an embodiment of the present invention provides a commodity experience apparatus 10. The commodity experience apparatus 10 includes an electronic display device 100 and a commodity show shelf 200, the commodity show shelf is configured to show commodities thereon, and the electronic display device 100 is arranged on the commodity show shelf 200. It can be understood that, in the present embodiment, the electronic display device 100 can be fixedly installed on the commodity show shelf 200, or can be detachably installed on the commodity show shelf 200, or can also be placed on the commodity show shelf 200. The commodity show shelf 200 is provided thereon with at least one removable displayed commodity, and the displayed commodity is provided thereon with a commodity identifier. In the present embodiment, optionally, the displayed commodities are samples of floor boards. It should be indicated that the displayed commodities can also be samples of floor accessory, tile, wallboard, ceiling, door and window and other commodities.

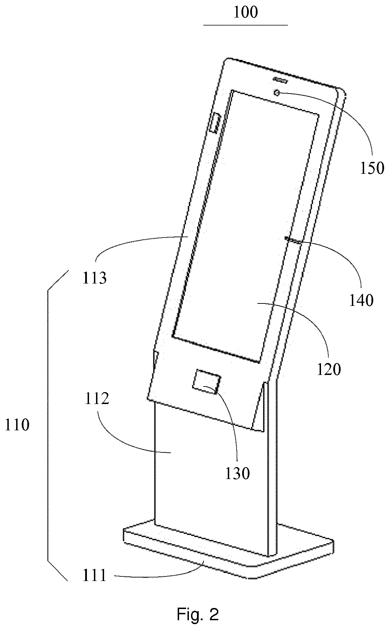

Referring to Fig. 2, in the present embodiment, the electronic display device 100 includes a device main body 110, a display screen 120 and a scanning device 130. The display screen 120 and the scanning device 130 are arranged on the device main body 110.

Optionally, the device main body 110 includes a device base 111, a transition part 112 and a display part 113. In the present embodiment, the transition part 112 is arranged on the device base 111, the display part 113 is arranged at one end of the transition part 112 that is away from the base 111, and turns upwards in a direction away from the transition part 112.

In the present embodiment, the display screen 120 can be a capacitive liquid crystal display screen. The electronic display device 100 can, in response to a user operation, log in an e-commerce platform system, and display, through the display screen 120, commodity information of a commodity chosen by the user. The user can log in, through the display screen 120, e-commerce platform systems of Online To Offline (020), Business To Customer (B2C) and Customer To Customer (C2C), to know more about a series of characteristics, such as models and prices, of commodities for sale on the various e-commerce platform systems. Optionally, the display screen 120 is arranged at an upper-middle portion of the device main body 110. Specifically, in the present embodiment, the display screen 120 is provided at a middle position of the display part 113.

The scanning device 130 can be a QR code scanner, and the scanning device 130 is configured to scan the commodity identifier of the displayed commodity. In the present embodiment, the commodity identifier of the displayed commodity is a QR code, and the QR code may include a purchase link QR code and a virtual reality (VR) video link QR code. The user can scan the QR code of the displayed commodity by using the scanning device 130, and obtain a purchase link through the scanning of the commodity identifier of the displayed commodity. The commodity experience apparatus may log in the e-commerce platform system according to the purchase link, and display, through the display screen, the commodity information of the displayed commodity, so that the user can directly know the characteristics of each product. Meanwhile, the user can also scan, with a mobile device, the QR code of the commodity displayed by the e-commerce platform system logged in through the display screen 120, so as to realize new experience of easy purchase at home. Optionally, the scanning device 130 is arranged at a lower-middle portion of the device main body 110. Specifically, in the present embodiment, the scanning device 130 is arranged at a lower position of the display part 113 and located below the display screen 120.

Optionally, in one implementation of the present embodiment, the commodity experience apparatus can further include VR glasses, and the VR glasses can display virtual reality videos or images. The scanning device can obtain a virtual reality video link by scanning a virtual reality video link QR code of the displayed commodity, and the commodity experience apparatus may obtain a virtual reality display effect of the displayed commodity according to the virtual reality video link, and display the virtual reality display effect via the VR glasses. For example, in the case where the displayed commodity is a floor board, with the VR glasses, the user can experience, by means of the VR virtual experience function, in advance the effect of installing such floor boards into his/her own apartment.

Optionally, in another implementation of the present embodiment, the commodity experience apparatus can further include VR glasses, and the VR glasses can cooperate with a mobile terminal so that virtual reality videos or images are displayed via the mobile terminal. The user can obtain the virtual reality video link by scanning, with the mobile terminal, the virtual reality video link QR code of the displayed commodity, and obtain the virtual reality display effect of the displayed commodity according to the virtual reality video link, and the virtual reality display effect is displayed in cooperation with the VR glasses.

Optionally, the commodity experience apparatus can be in communication with a customer service center, and the electronic display device 100 may further include a voice communication device 140 having a one-touch dialing function. In the present embodiment, the voice communication device 140 is arranged on the device main body 110. Specifically, the voice communication device 140 is arranged at a middle position of the display part 113 and located at one side of the display screen 120. The voice communication device 140 is configured to perform image or video intersection with the customer service center, enabling the user to communicate with an online service agent in real time.

Optionally, the electronic display device 100 may further include a camera 150. In the present embodiment, the camera 150 is arranged on the device main body 110. Specifically, the camera 150 is arranged at an upper portion of the display part 113 and located above the display screen 120. The camera 150 is configured so that it is possible to perform image or video interaction with the customer service center, enabling the user to communicate with the online service agent in real time.

With the above configuration, if the user has any questions during the process of experiencing and purchasing the commodity, the user can communicate with an online service agent in real time via the voice communication device 140 and the camera 150. This makes it possible to solve problems encountered in the experiencing process and in before-sales, in-sales and after-sales stages, so as to provide better commodity experience and purchasing experience for the user.

Optionally, the electronic display device 100 may further include a human body sensor and a voice broadcast device. In the present embodiment, the human body sensor and the voice broadcast device are arranged on the device main body 110. Specifically, the human body sensor is configured to detect whether a user is approaching, and control the voice broadcast device to send a voice greeting message or control the display screen 120 to display a textual and graphic greeting message if the result of the detection indicates that a user is approaching. In the present embodiment, the human body sensor can be a human body microwave sensor, a human body infrared sensor and the like.

Optionally, the display screen 120, the scanning device 130, the voice communication device 140, the camera 150, the human body sensor and the voice broadcast device are all arranged at a same side of the device main body 110. Specifically, the display screen 120, the scanning device 130, the voice communication device 140, the camera 150, the human body sensor and the voice broadcast device are all arranged at a same side of the display part 113.

As can be seen from the above, the electronic display device 100 of the present embodiment mainly consists of the display screen 120, the scanning device 130, the voice communication device 140, the camera 150, the human body sensor and the voice broadcast device. It should be indicated that, in the present embodiment, the electronic display device 100 may further include a microcontroller configured to control the overall operating state of the electronic display device 100 and perform data information processing. Besides, optionally, the electronic display device 100 may further include a headphone jack, a power supply interface, a network interface, a data transmission interface and so on.

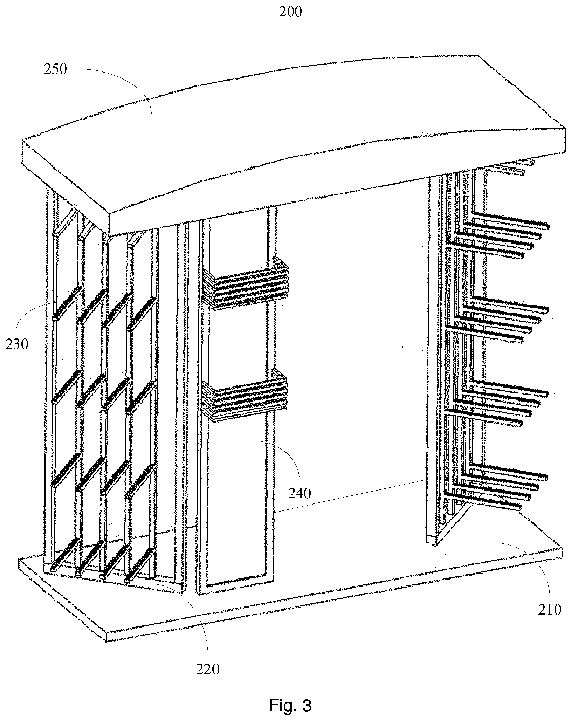

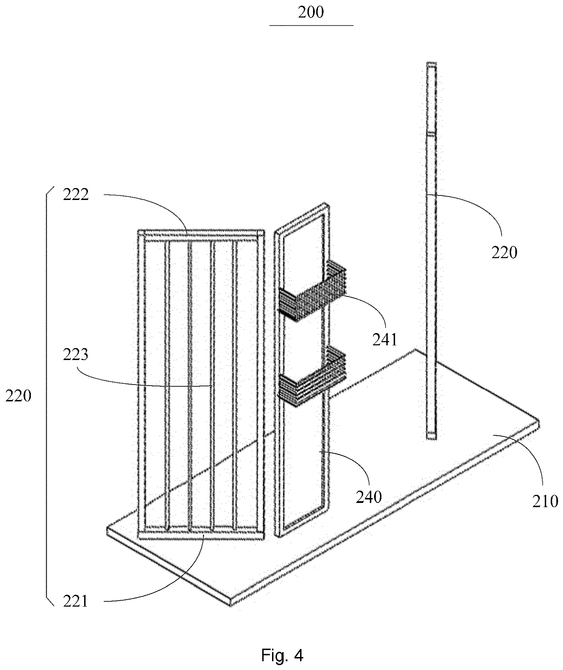

Referring to Fig. 3 and Fig. 4, in the present embodiment, the commodity show shelf 200 includes a base 210, a show shelf main body 220, a supporting frame 230 and a storage shelf 240. The show shelf main body 220 and the storage shelf 240 are arranged on the base 210, and the supporting frame 230 is arranged on the show shelf main body 220. In the present embodiment, the device main body 110 is arranged on the base 210.

The supporting frame 230 is configured to support displayed commodities which are provided thereon with the commodity identifiers. The storage shelf 240 is configured for placement of textual and graphic files of the displayed commodities as well as the VR glasses matching the electronic display device 100. The textual and graphic files of the displayed commodities can be the latest and most comprehensive product manuals and brand manuals of enterprises, with which, the user can comprehensively understand the background of the enterprise and a full range of products before purchasing the displayed commodity.

In the present embodiment, the commodity show shelf 200 includes a top cover 250. Besides, the show shelf main body 220 includes a first cross rod 221 and a second cross rod 222 arranged opposite to each other. The first cross rod 221 is arranged on the base 210, and the second cross rod 222 is arranged on the top cover 250 at a position corresponding to a position where the first cross rod is provided on the base 210. In the present embodiment, the show shelf main body 220 includes a plurality of upright rods 223 connected between the first cross rod 221 and the second cross rod 222. Optionally, the upright rod 223 is a long rod of a circular cross section, and there is spacing between two adjacent upright rods 223.

It can be understood that, optionally, there can be multiple pairs of the first cross rod 221 and the second cross rod 222, with each pair of the first cross rod 221 and the second cross rod 222 provided with a plurality of upright rods 223 therebetween. In the present embodiment, there are two pairs of the first cross rod 221 and the second cross rod 222.

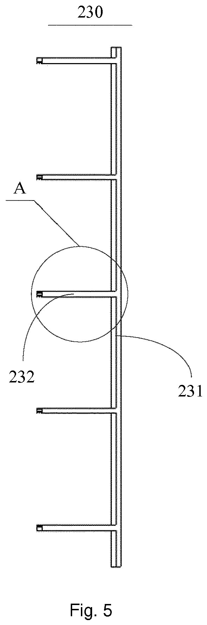

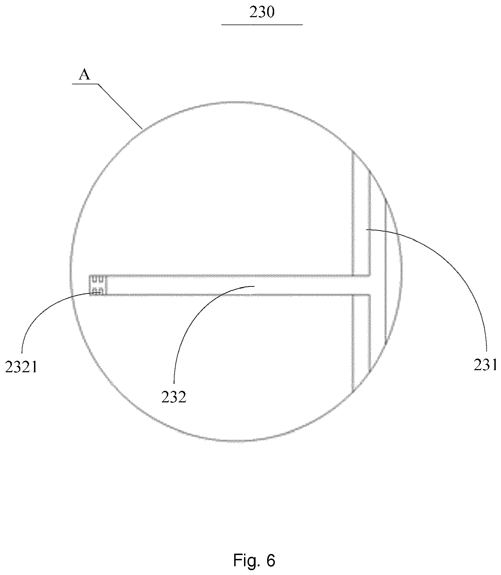

In combination with Fig. 5 and Fig. 6, the supporting frame 230 includes sleeves 231 and a plurality of clamping rods 232 arranged on the sleeves 231. In the present embodiment, one end of the clamping rod 232 is arranged on the sleeve 231, and the other end of the clamping rod extends in a direction perpendicular to a length direction of the sleeve 231. Besides, each of the clamping rods 232 is provided thereon with two clamping grooves 2321. The two clamping grooves 2321 have their respective openings in opposite direction and in the length direction of the sleeve 231. The openings of the clamping grooves of two adjacent clamping rods 232 on a same upright rod 223 face to each other, forming a space for clamping the displayed commodity.

It should be indicated that the clamping rods 232 arranged at the ends of the sleeve 231 each can be provided thereon with only one clamping groove 2321, with the groove opening of the clamping groove 2321 of the clamping rod 232 arranged at the upper end of the sleeve 231 oriented downwards, and the groove opening of the clamping groove 2321 of the clamping rod 232 arranged at the lower end of the sleeve 231 orientated upwards, so that every two adjacent clamping rods 232 on the same upright rod 223 form a space therebetween for clamping the displayed commodity.

In the present embodiment, in order to increase the number of the displayed commodities, optionally, the clamping grooves 2321 provided on each of the clamping rods 232 can also be in other numbers, for example, there may be four clamping grooves provided on each of the clamping rods. In the case where each of the clamping rods 232 is provided thereon with four clamping grooves 2321, the groove openings of two of the clamping grooves 2321 are oriented upwards, and the groove openings of the other two of the clamping grooves 2321 are oriented downwards, and the two clamping grooves 2321 with the upward groove openings correspond in position to the two clamping grooves 2321 with the downward groove openings. In the present embodiment, the sleeves 231, corresponding one to one to the upright rods 223, are rotatably sleeved onto the upright rods 223. The user can adjust a spacing distance between the displayed commodities by rotating the sleeve 231, so as to choose an appropriate spacing distance for easy observation.

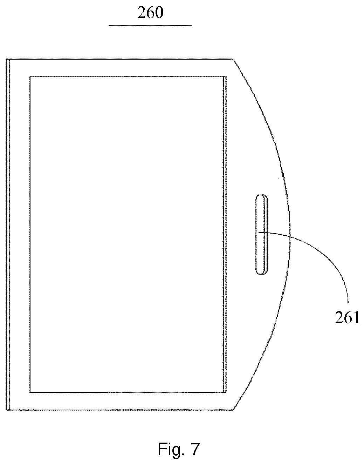

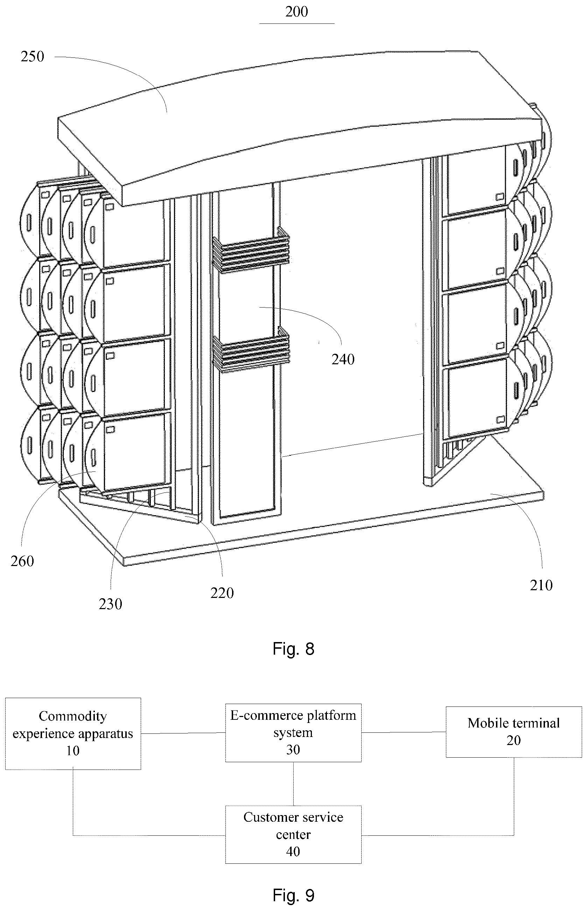

Referring to Fig. 7 and Fig. 8, optionally, the commodity show shelf 200 may further include a show board 260 configured for placement of the displayed commodity, and the show board 260 is clamped in the clamping grooves 2321 provided on two adjacent clamping rods 232. Optionally, the show board 260 is hollow in center, and configured to clamp the displayed commodity. Besides, a pull hole 261 is further provided at an edge of the show board 260, to facilitate user's operations. The floor board is arranged on the show board 260. After the show board 260 is taken out from the clamping grooves 2321, the floor board can be taken out.

With the above configuration, the user can take out the displayed commodity from the clamping grooves 2321, and can then enter a purchase page of this displayed commodity which is displayed by the e-commerce platform system, by scanning the purchase link QR code provided on the displayed commodity with the above scanning device 130 or a mobile device. Likewise, the user can also scan the VR video link QR code provided on the displayed commodity with the above scanning device 130 or a mobile device, to open a VR video page of this displayed commodity, and experience, via the VR glasses equipped for the commodity experience apparatus 10, the effect of paving such floor boards in a room.

It should be indicated that, after the user enters a shopping interface of a relevant product which is displayed by the e-commerce platform system logged in through the display screen 120, since each commodity displayed on the shopping interface is also provided with a purchase link QR code and a VR video link QR code, the user can also open a purchase page of this displayed commodity by scanning the purchase link QR code, and open a VR video page of this displayed commodity by scanning the VR video link QR code. However, different from the displayed commodities which are listed on the commodity show shelf 200, only after scanning the purchase link QR code and the VR video link QR code with the mobile device, can the user perform subsequent operations.

In the present embodiment, the storage shelf 240 is provided with at least two storage baskets 241. In the case where two storage baskets 241 are provided, one of the storage baskets is configured for placement of the textual and graphic files of the displayed commodities, and the other one of the storage baskets is configured for placement of the VR glasses which is equipped for the commodity experience apparatus 10 and matches the electronic display device 100.

Referring to Fig. 9, an embodiment of the present invention further provides a commodity experience system. The commodity experience system includes a mobile terminal 20, an e-commerce platform system 30 and the above commodity experience apparatus 10. The mobile terminal 20 and the commodity experience apparatus 10 each are in communication with the e-commerce platform system 30. The mobile terminal 20 can be a smart cellphone and a tablet computer of the user and other mobile devices.

The mobile terminal 20 is configured to scan a commodity identifier of a displayed commodity, to acquire a purchase link or a virtual reality video link of the displayed commodity. The e-commerce platform system 30 is configured to store commodity information of the displayed commodities, and is further configured to process relevant information such as ordering information.

In order to solve problems encountered in the experiencing process and in before-sales, in-sales and after-sales stages, so as to provide better commodity experience and purchasing experience for the user, optionally, the commodity experience system may further include a customer service center 40. The customer service center 40 is in communication with the commodity experience apparatus 10, the mobile terminal 20 and the e-commerce platform system 30, so as to realize real-time communication between the user and an online service agent.

The present embodiment further provides a commodity experience method. The commodity experience method is applied to the commodity experience apparatus 10 provided in the embodiment. The method includes step S110 and Step S120.

In Step S110, a purchase link is obtained by the scanning device 130 scanning the commodity identifier of the displayed commodity.

In Step S120, the e-commerce platform system 30 is logged in according to the purchase link, and the commodity information of the displayed commodity is displayed through the display screen 120, with the commodity information provided by the e-commerce platform system.

Furthermore, in the present embodiment, the method further can include Step S130 and Step S140.

In Step S130, a virtual reality video link is obtained by the scanning device 130 scanning the commodity identifier of the displayed commodity.

In Step S140, a virtual reality display image of the displayed commodity is acquired according to the virtual reality video link, and the virtual reality display image is displayed through the virtual reality glasses.

Furthermore, in the present embodiment, the method can further include Step S150.

In Step S150, a user operation for logging in the e-commerce platform system 30 is received, and commodity information of a commodity chosen by the user is displayed through the display screen 120.

Furthermore, in the present embodiment, the method can further include: realizing voice interaction with the customer service center 40, via the voice communication device 140.

Furthermore, in the present embodiment, the method can further include: realizing image interaction with the customer service center 40, via the camera 150 and/or the display screen 120.

To sum up, in the commodity experience apparatus 10 and system provided by the embodiments of the present invention, with the ingenious combination of the electronic display device 100 and the commodity show shelf 200, it not only provides numerous commodity information and a convenient shopping channel for the users, but also can assist the users in obtaining the virtual experience of commodities and enable the users to see samples at any time, and meanwhile, avoid the case that the commodity shopped online is not in line with the real commodity.

It also should be indicated that, in the description of the present invention, unless otherwise specified and defined, terms "arrange", "install" and "connect" should be understood in a broad sense. For example, a connection can be a fixed connection, a detachable connection, or an integrated connection; it can be a mechanical connection or an electrical connection; and it can be a direct connection or an indirect connection via an intermediate medium; and also can be an inner communication between two elements. For a person ordinarily skilled in the art, the specific meanings of the above-mentioned terms in the present invention can be understood according to specific circumstances.

It should be noted that, in the description of the present invention, the orientational or positional relationships indicated by terms such as "upper", "lower", "top" and "bottom" are based on the orientational or positional relationships as shown in the figures, or the orientational or positional relationships in which the inventive product is placed conventionally, which is merely for facilitating describing the present invention and simplifying the description, rather than indicating or suggesting that related devices or elements have to be in the specific orientation or configured and operated in specific orientation. Therefore, they should not be construed as limiting the present invention. Besides, terms such as "first", "second" and "third" are merely for distinctive description, and should not be construed as indicating or implying relative importance.

### Industrial Applicability

In the commodity experience apparatus 10 and system provided by the embodiments of the present invention, with the ingenious combination of the electronic display device 100 and the commodity show shelf 200, it not only provides numerous commodity information and a convenient shopping channel for the users, but also can assist the users in obtaining the virtual experience of commodities and enable the users to see samples at any time, and meanwhile, avoid the case that the commodity shopped online is not in line with the real commodity. The user can take out the displayed commodity from the clamping grooves 2321, and can then enter a purchase page of this displayed commodity which is displayed by the e-commerce platform system, by scanning the purchase link QR code provided on the displayed commodity with the above scanning device 130 or a mobile device. Likewise, the user can also scan the VR video link QR code provided on the displayed commodity with the above scanning device 130 or a mobile device, to open a VR video page of this displayed commodity, and experience, via the VR glasses equipped for the commodity experience apparatus 10, the effect of paving such floor boards in a room. The commodity experience apparatus 10 can also communicate with the customer service center 40, so that the user can communicate with the online service agent in real time, to solve problems encountered in the experiencing process and in before-sales, in-sales and after-sales stages, and therefore, it is possible to provide better commodity experience and purchasing experience for the user.

## Claims

1. A commodity experience apparatus, comprising an electronic display device (100) and a commodity show shelf (200), the electronic display device (100) being arranged on the commodity show shelf (200),
wherein the electronic display device (100) comprises a device main body (110), a display screen (120) and a scanning device (130), with the display screen (120) and the scanning device (130) arranged on the device main body (110);
the commodity show shelf (200) comprises a base (210), a show shelf main body (220), a supporting frame (230), a top cover (250), and a storage shelf (240), with the show shelf main body (220) and the storage shelf (240) arranged on the base (210), and the supporting frame (230) arranged on the show shelf main body (220); and
the device main body (110) is arranged on the base (210), the supporting frame (230) is configured to support displayed commodities, each of the displayed commodities is provided with a commodity identifier, the storage shelf (240) is configured for placement of virtual reality glasses as well as textual and graphic files of the displayed commodities, the display screen (120) is configured to display commodity information of the displayed commodities by logging in an e-commerce platform system, and the scanning device (130) is configured to scan the commodity identifiers of the displayed commodities,
**characterized in that** the show shelf main body (220) comprises a first cross rod (221) and a second cross rod (222) arranged opposite to each other, and a plurality of upright rods (223) connected between the first cross rod (221) and the second cross rod (222); wherein the first cross rod (221) is arranged on the base (210) and the second cross rod (222) is arranged on the top cover (250) at a position corresponding to a position where the first cross rod (221) is provided on the base (210);
**in that** the supporting frame (230) comprises sleeves (231) and a plurality of clamping rods (232) arranged on the sleeves (231), each of the clamping rods (232) is provided thereon with two clamping grooves (2321), and the two clamping grooves (2321) have their respective openings in opposite direction and in a length direction of the sleeves (231), the openings of the clamping grooves (2321) of two adjacent clamping rods (232) on the same upright rod (223) face to each other, forming a space for clamping one of the displayed commodities; and
**in that** the sleeves (231), corresponding one to one to the upright rods (223), are rotatably sleeved onto the upright rods (223), such that a spacing distance between the displayed commodities can be adjusted by a user by rotating the sleeves (231).

2. The commodity experience apparatus according to claim 1, **characterized in that** the commodity experience apparatus is in communication with a customer service center (40), and the electronic display device (100) further comprises a voice communication device (140), with the voice communication device (140) arranged on the device main body (110); and
the voice communication device (140) is configured to realize real-time communication between a user and an online service agent.

3. The commodity experience apparatus according to claim 2, **characterized in that** the electronic display device (100) further comprises a camera (150), with the camera (150) arranged on the device main body (110); and
the camera (150) is configured to realize the real-time communication between the user and the online service agent.

4. The commodity experience apparatus according to claim 3, **characterized in that** the display screen (120) is arranged at an upper-middle portion of the device main body (110), the scanning device (130) is arranged at a lower-middle portion of the device main body (110), the voice communication device (140) is arranged at the upper-middle portion of the device main body (110) and located at one side of the display screen (120), and the camera (150) is arranged at an upper portion of the device main body (110); and
the display screen (120), the scanning device (130), the camera (150) and the voice communication device (140) are all arranged at a same side of the device main body (110).

5. The commodity experience apparatus according to claim 1, **characterized in that** the commodity show shelf (200) further comprises a show board (260) configured for placement of the displayed commodity, and the show board (260) is clamped in the clamping grooves (2321) provided on adjacent two of the clamping rods (232).

6. The commodity experience apparatus according to claim 1, **characterized in that** one end of each of the clamping rods (232) is arranged on one of the sleeves (231), and the other end of each of the clamping rods (232) extends in a direction perpendicular to the length direction of the sleeves (231).

7. The commodity experience apparatus according to claim 1, **characterized in that** the commodity identifier of the displayed commodity is a quick response (QR) code, the QR code comprises a purchase link QR code and a virtual reality video link QR code, and the scanning device (130) is a QR code scanner.

8. The commodity experience apparatus according to claim 7, **characterized in that** the commodity experience apparatus is in communication with the e-commerce platform system; the scanning device (130) is configured to scan the purchase link QR code to obtain a purchase link, and the commodity experience apparatus logs in the e-commerce platform system according to the purchase link, and displays, through the display screen (120), commodity information of the displayed commodity with the commodity information provided by the e-commerce platform system.

9. A commodity experience system, **characterized by** comprising a mobile terminal (20), an e-commerce platform system; and the commodity experience apparatus according to any one of claims 1-7, the mobile terminal (20) and the commodity experience apparatus each being in communication with the e-commerce platform system,
wherein the mobile terminal (20) is configured to scan the commodity identifier of the displayed commodity to acquire a purchase link or a virtual reality video link of the displayed commodity; and
the e-commerce platform system is configured to store the commodity information of the displayed commodity, and is further configured to process relevant information including ordering information.

10. The commodity experience system according to claim 9, **characterized in that** the commodity experience system further comprises a customer service center (40), with the customer service center (40) being in communication with the commodity experience apparatus, the mobile terminal (20) and the e-commerce platform system; and
the customer service center (40) is configured to realize real-time communication between a user and an online service agent.

11. A commodity experience method, performed using a commodity experience apparatus according to any one of claims 1-8, the method comprising:
obtaining a purchase link by the scanning device (130) scanning the commodity identifier of the displayed commodity; and
logging in the e-commerce platform system according to the purchase link, and displaying, through the display screen (120), commodity information of the displayed commodity with the commodity information provided by the e-commerce platform system.

12. The method according to claim 11, **characterized in that** the method further comprises:
obtaining a virtual reality video link by the scanning device (130) scanning the commodity identifier of the displayed commodity; and
acquiring a virtual reality display image of the displayed commodity according to the virtual reality video link, and displaying the virtual reality display image through virtual reality glasses.

13. The commodity experience method according to claim 11, **characterized in that** the method further comprises:
receiving a user operation for logging in the e-commerce platform system, and displaying, through the display screen (120), the commodity information of a commodity chosen by the user.

14. The method according to any one of claims 11-13, performed using a commodity experience apparatus according to any one of claims 3 or 4,
**characterized in that** the method further comprises:
realizing voice interaction with the customer service center (40), via the voice communication device (140); and
realizing image interaction with the customer service center (40), via the camera (150) and/or the display screen (120).

## Patentansprüche

1. Warenerlebnisgerät, umfassend eine elektronische Anzeigevorrichtung (100) und ein Warenpräsentationsregal (200), wobei die elektronische Anzeigevorrichtung (100) auf dem Warenpräsentationsregal (200) angeordnet ist,
wobei die elektronische Anzeigevorrichtung (100) einen Vorrichtungshauptkörper (110), einen Anzeigebildschirm (120) und eine Abtastvorrichtung (130) umfasst, wobei der Anzeigebildschirm (120) und die Abtastvorrichtung (130) auf dem Vorrichtungshauptkörper (110) angeordnet sind;
wobei das Warenpräsentationsregal (200) einen Sockel (210), einen Präsentationsregal-Hauptkörper (220), einen Tragrahmen (230), eine obere Abdeckung (250) und ein Lagerregal (240) umfasst, wobei der Präsentationsregal-Hauptkörper (220) und das Lagerregal (240) auf dem Sockel (210) und der Tragrahmen (230) auf dem Präsentationsregal-Hauptkörper (220) angeordnet sind; und
wobei der Vorrichtungshauptkörper (110) auf dem Sockel (210) angeordnet ist, wobei der Tragrahmen (230) konfiguriert ist, um angezeigte Waren zu tragen, wobei jede der angezeigten Waren mit einer Warenkennung versehen ist, wobei das Lagerregal (240) konfiguriert ist, um eine Virtual-Reality-Brille sowie Text- und Grafikdateien der angezeigten Waren zu platzieren, wobei der Anzeigebildschirm (120) konfiguriert ist, um Wareninformationen der angezeigten Waren durch Einloggen in ein E-Commerce-Plattformsystem anzuzeigen, und wobei die Abtastvorrichtung (130) konfiguriert ist, um die Warenkennungen der angezeigten Waren abzutasten,
**dadurch gekennzeichnet, dass** der Präsentationsregal-Hauptkörper (220) eine erste Querstange (221) und eine zweite Querstange (222), die einander gegenüberliegend angeordnet sind, und eine Vielzahl von aufrechten Stangen (223), die zwischen der ersten Querstange (221) und der zweiten Querstange (222) verbunden sind, umfasst; wobei die erste Querstange (221) an dem Sockel (210) angeordnet ist und die zweite Querstange (222) an der oberen Abdeckung (250) in einer Position angeordnet ist, die einer Position entspricht, in der die erste Querstange (221) an dem Sockel (210) vorgesehen ist;
dass der Tragrahmen (230) Hülsen (231) und mehreren auf den Hülsen (231) angeordneten Klemmstangen (232) umfasst, wobei jede der Klemmstangen (232) darauf mit zwei Klemmnuten (2321) versehen ist, und die beiden Klemmnuten (2321) ihre jeweiligen Öffnungen in entgegengesetzter Richtung und in einer Längsrichtung der Hülsen (231) haben, wobei die Öffnungen der Klemmnuten (2321) zweier benachbarter Klemmstangen (232) auf derselben aufrechten Stange (223) einander gegenüberliegen und einen Raum zum Festklemmen einer der angezeigten Waren bilden; und
dass die Hülsen (231), die eins zu eins den aufrechten Stangen (223) entsprechen, drehbar auf die aufrechten Stangen (223) aufgesteckt sind, so dass ein Abstand zwischen den angezeigten Waren durch einen Benutzer durch Drehen der Hülsen eingestellt werden kann (231).

2. Warenerlebnisgerät nach Anspruch 1, **dadurch gekennzeichnet, dass** das Warenerlebnisgerät mit einem Kundendienstzentrum (40) in Verbindung steht und die elektronische Anzeigevorrichtung (100) ferner eine Sprachkommunikationsvorrichtung (140) umfasst, wobei die Sprachkommunikationsvorrichtung (140) auf dem Vorrichtungshauptkörper (110) angeordnet ist; und
wobei die Sprachkommunikationsvorrichtung (140) so konfiguriert ist, dass sie eine Echtzeitkommunikation zwischen einem Benutzer und einem Online-Service-Agenten realisiert.

3. Warenerlebnisgerät nach Anspruch 2, **dadurch gekennzeichnet, dass** die elektronische Anzeigevorrichtung (100) ferner eine Kamera (150) umfasst, wobei die Kamera (150) auf dem Vorrichtungshauptkörper (110) angeordnet ist; und
wobei die Kamera (150) so konfiguriert ist, dass sie die Echtzeitkommunikation zwischen dem Benutzer und dem Online-Service-Agenten realisiert.

4. Warenerlebnisgerät nach Anspruch 3, **dadurch gekennzeichnet, dass** der Anzeigebildschirm (120) an einem oberen mittleren Abschnitt des Vorrichtungshauptkörpers (110) angeordnet ist, die Abtastvorrichtung (130) an einem unteren mittleren Abschnitt des Vorrichtungshauptkörpers (110) angeordnet ist, die Sprachkommunikationsvorrichtung (140) an dem oberen mittleren Abschnitt des Vorrichtungshauptkörpers (110) angeordnet ist und sich an einer Seite des Anzeigebildschirms (120) befindet, und die Kamera (150) an einem oberen Abschnitt des Vorrichtungshauptkörpers (110) angeordnet ist; und
wobei der Anzeigebildschirm (120), die Abtastvorrichtung (130), die Kamera (150) und die Sprachkommunikationsvorrichtung (140) alle auf derselben Seite des Vorrichtungshauptkörpers (110) angeordnet sind.

5. Warenerlebnisgerät nach Anspruch 1, **dadurch gekennzeichnet, dass** das Warenpräsentationsregal (200) ferner ein Präsentationsbrett (260) umfasst, das zur Platzierung der angezeigten Ware konfiguriert ist, und dass das Präsentationsbrett (260) in den Klemmnuten (2321) festgeklemmt ist, die an zwei benachbarten der Klemmstangen (232) vorgesehen sind.

6. Warenerlebnisgerät nach Anspruch 1, **dadurch gekennzeichnet, dass** ein Ende jeder der Klemmstangen (232) an einer der Hülsen (231) angeordnet ist und das andere Ende jeder der Klemmstangen (232) sich in einer Richtung senkrecht zur Längsrichtung der Hülsen (231) erstreckt.

7. Warenerlebnisgerät nach Anspruch 1, **dadurch gekennzeichnet, dass** die Warenkennung der angezeigten Ware ein Quick-Response-Code (QR-Code) ist, wobei der QR-Code einen Kauflink-QR-Code und einen Virtual-Reality-Video-Link-QR-Code umfasst und die Abtastvorrichtung (130) ein QR-Code-Scanner ist.

8. Warenerlebnisgerät nach Anspruch 7, **dadurch gekennzeichnet, dass** das Warenerlebnisgerät mit dem E-Commerce-Plattformsystem in Verbindung steht; die Abtastvorrichtung (130) so konfiguriert ist, dass sie den Kauflink-QR-Code abtastet, um einen Kauflink zu erhalten, und wobei das Warenerlebnisgerät sich gemäß dem Kauflink in das E-Commerce-Plattformsystem einloggt und über den Anzeigebildschirm (120) Wareninformationen der vom E-Commerce-Plattformsystem bereitgestellten angezeigten Ware anzeigt.

9. Warenerlebnissystem, **dadurch gekennzeichnet, dass** es Folgendes umfasst: ein mobiles Endgerät (20), ein E-Commerce-Plattformsystem; und das Warenerlebnisgerät nach einem der Ansprüche 1-7, wobei das mobile Endgerät (20) und das Warenerlebnisgerät jeweils mit dem E-Commerce-Plattformsystem kommunizieren,
wobei das mobile Endgerät (20) so konfiguriert ist, dass es die Warenkennung der angezeigten Ware scannt, um einen Kauflink oder einen Virtual-Reality-Videolink der angezeigten Ware zu erhalten; und
wobei das E-Commerce-Plattformsystem so konfiguriert ist, dass es die Wareninformationen der angezeigten Ware speichert, und ist außerdem so konfiguriert, dass es relevante Informationen, einschließlich Bestellinformationen, verarbeitet.

10. Warenerlebnissystem nach Anspruch 9, **dadurch gekennzeichnet, dass** das Warenerlebnissystem ferner ein Kundendienstzentrum (40) umfasst, wobei das Kundendienstzentrum (40) mit dem Warenerlebnisgerät, dem mobilen Endgerät (20) und dem E-Commerce-Plattformsystem in Verbindung steht; und
wobei das Kundendienstzentrum (40) so konfiguriert ist, dass es eine Echtzeitkommunikation zwischen einem Benutzer und einem Online-Service-Agenten realisiert.

11. Warenerlebnisverfahren, das unter Verwendung eines Warenerlebnisgeräts nach einem der Ansprüche 1-8 durchgeführt wird, wobei das Verfahren Folgendes umfasst:
Erhalten eines Kauflinks durch die Abtastvorrichtung (130), die die Warenkennung der angezeigten Ware abtastet; und
Einloggen in das E-Commerce-Plattformsystem gemäß dem Kauflink, und Anzeigen von Wareninformationen der angezeigten Ware mit den Wareninformationen vom E-Commerce-Plattformsystem bereitgestellten über den Anzeigebildschirm (120).

12. Warenerlebnisverfahren nach Anspruch 11, **dadurch gekennzeichnet, dass** das Warenerlebnisverfahren ferner umfasst:
Erhalten eines Virtual-Reality-Videolinks durch die Abtastvorrichtung (130), die die Warenkennung der angezeigten Ware abtastet; und
Erfassen eines Virtual-Reality-Anzeigebildes der angezeigten Ware gemäß dem Virtual-Reality-Videolink und Anzeigen des Virtual-Reality-Anzeigebildes durch eine Virtual-Reality-Brille.

13. Warenerlebnisverfahren nach Anspruch 11, **dadurch gekennzeichnet, dass** das Warenerlebnisverfahren ferner umfasst:
Empfangen einer Benutzeroperation zum Einloggen in das E-Commerce-Plattformsystem und Anzeigen der Wareninformationen einer vom Benutzer ausgewählten Ware über den Anzeigebildschirm (120).

14. Warenerlebnisverfahren nach einem der Ansprüche 11 bis 13, das unter Verwendung eines Warenerlebnisgeräts nach einem der Ansprüche 3 oder 4 durchgeführt wird, **dadurch gekennzeichnet, dass** das Warenerlebnisverfahren ferner umfasst:
Realisieren einer Sprachinteraktion mit dem Kundendienstzentrum (40) über die Sprachkommunikationsvorrichtung (140); und
Realisieren der Bildinteraktion mit dem Kundendienstzentrum (40) über die Kamera (150) und/oder den Anzeigebildschirm (120).

## Revendications

1. Appareil d'expérience de marchandises, comprenant un dispositif d'affichage électronique (100) et une étagère de présentation de marchandises (200), le dispositif d'affichage électronique (100) étant disposé sur l'étagère de présentation de marchandises (200),
dans lequel le dispositif d'affichage électronique (100) comprend un corps principal de dispositif (110), un écran d'affichage (120) et un dispositif de numérisation (130), l'écran d'affichage (120) et le dispositif de numérisation (130) étant disposés sur le corps principal de dispositif (110) ;
l'étagère de présentation de marchandises (200) comprend une base (210), un corps principal d'étagère de présentation (220), un cadre de support (230), un couvercle supérieur (250) et une étagère de stockage (240), le corps principal d'étagère de présentation (220) et l'étagère de stockage (240) étant disposés sur la base (210), et le cadre de support (230) étant disposé sur le corps principal d'étagère de présentation (220) ; et
le corps principal du dispositif (110) est disposé sur la base (210), le cadre de support (230) est configuré pour supporter les marchandises affichées, chacun des marchandises affichées est pourvu d'un identifiant de marchandises, l'étagère de stockage (240) est configurée pour le placement de lunettes de réalité virtuelle ainsi que de fichiers textuels et graphiques des marchandises affichées, l'écran d'affichage (120) est configuré pour afficher les informations sur les marchandises affichées en se connectant à un système de plateforme de commerce électronique, et le dispositif de numérisation (130) est configuré pour numériser les identifiants de marchandises des marchandises affichées,
**caractérisé en ce que** le corps principal de l'étagère d'affichage (220) comprend une première tige transversale (221) et une seconde tige transversale (222) disposées en face l'une de l'autre, et une pluralité de tiges verticales (223) connectées entre la première tige transversale (221) et la seconde tige transversale (222) ; dans lequel la première tige transversale (221) est disposée sur la base (210) et la seconde tige transversale (222) est disposée sur le couvercle supérieur (250) à une position correspondant à une position où la première tige transversale (221) est disposée sur la base (210) ;
**en ce que** le cadre de support (230) comprend des manchons (231) et une pluralité de tiges de serrage (232) disposées sur les manchons (231), chacune des tiges de serrage (232) est pourvue de deux rainures de serrage (2321), et les deux rainures de serrage (2321) ont leurs ouvertures respectives dans une direction opposée et dans une direction de la longueur des manchons (231), les ouvertures des rainures de serrage (2321) de deux tiges de serrage adjacentes (232) sur la même tige verticale (223) se faisant face, formant un espace pour serrer l'un des marchandises affichées ; et **en ce que** les manchons (231), correspondant un à un aux tiges verticales (223), sont emmanchés de manière rotative sur les tiges verticales (223), de telle sorte qu'une distance d'espacement entre les marchandises affichées peut être ajustée par un utilisateur en faisant tourner les manchons (231).

2. Appareil d'expérience de marchandises selon la revendication 1, **caractérisé en ce que** l'appareil d'expérience de marchandises est en communication avec un centre de service client (40), et le dispositif d'affichage électronique (100) comprend en outre un dispositif de communication vocale (140), le dispositif de communication vocale (140) étant disposé sur le corps principal du dispositif (110) ; et
le dispositif de communication vocale (140) est configuré pour réaliser une communication en temps réel entre un utilisateur et un agent de service en ligne.

3. Appareil d'expérience de marchandises selon la revendication 2, **caractérisé en ce que** le dispositif d'affichage électronique (100) comprend en outre une caméra (150), la caméra (150) étant disposée sur le corps principal du dispositif (110) ; et
la caméra (150) est configurée pour réaliser la communication en temps réel entre l'utilisateur et l'agent de service en ligne.

4. Appareil d'expérience de marchandises selon la revendication 3, **caractérisé en ce que** l'écran d'affichage (120) est disposé dans une partie médiane supérieure du corps principal du dispositif (110), le dispositif de numérisation (130) est disposé dans une partie médiane inférieure du corps principal du dispositif (110), le dispositif de communication vocale (140) est disposé dans la partie médiane supérieure du corps principal du dispositif (110) et situé sur un côté de l'écran d'affichage (120), et la caméra (150) est disposée dans une partie supérieure du corps principal du dispositif (110) ; et
l'écran d'affichage (120), le dispositif de numérisation(130), la caméra (150) et le dispositif de communication vocale (140) sont tous disposés sur un même côté du corps principal du dispositif (110).

5. Appareil d'expérience de marchandises selon la revendication 1, **caractérisé en ce que** l'étagère de présentation de marchandise (200) comprend en outre un panneau de présentation (260) configuré pour le placement de la marchandise affichée, et le panneau de présentation (260) est serré dans les rainures de serrage (2321) prévues sur deux tiges de serrage (232) adjacentes.

6. Appareil d'expérience de marchandises selon la revendication 1, **caractérisé en ce qu'**une extrémité de chacune des tiges de serrage (232) est disposée sur l'un des manchons (231), et l'autre extrémité de chacune des tiges de serrage (232) s'étend dans une direction perpendiculaire à la direction de la longueur des manchons (231).

7. Appareil d'expérience de marchandises selon la revendication 1, **caractérisé en ce que** l'identifiant de marchandises de la marchandise affichée est un code à réponse rapide (QR), le code QR comprend un code QR de lien d'achat et un code QR de lien vidéo de réalité virtuelle, et le dispositif de numérisation (130) est un scanner de code QR.

8. Appareil d'expérience de marchandises selon la revendication 7, **caractérisé en ce que** l'appareil d'expérience de marchandises est en communication avec le système de plateforme de commerce électronique; le dispositif de numérisation (130) est configuré pour numériser le code QR du lien d'achat pour obtenir un lien d'achat, et l'appareil d'expérience de marchandises se connecte au système de plateforme de commerce électronique en fonction du lien d'achat, et affiche, par l'intermédiaire de l'écran d'affichage (120), des informations sur la marchandise affichée avec les informations fournies par le système de plateforme de commerce électronique.

9. Système d'expérience de marchandises, **caractérisé en ce qu'**il comprend un terminal mobile (20), un système de plateforme de commerce électronique; et l'appareil d'expérience de marchandises selon l'une quelconque des revendications 1 à 7, le terminal mobile (20) et l'appareil d'expérience de marchandises étant chacun en communication avec le système de plateforme de commerce électronique,
dans lequel le terminal mobile (20) est configuré pour numériser l'identifiant de marchandises de la marchandise affichée pour acquérir un lien d'achat ou un lien vidéo de réalité virtuelle de la marchandise affichée ; et
le système de plateforme de commerce électronique est configuré pour stocker les informations sur la marchandise affichée, et est en outre configuré pour traiter des informations pertinentes, y compris des informations de commande.

10. Système d'expérience de marchandises selon la revendication 9, **caractérisé en ce que** le système d'expérience de marchandises comprend en outre un centre de service client (40), le centre de service client (40) étant en communication avec l'appareil d'expérience de marchandises, le terminal mobile (20) et le système de plateforme de commerce électronique ; et
le centre de service client (40) est configuré pour réaliser une communication en temps réel entre un utilisateur et un agent de service en ligne.

11. Procédé d'expérience de marchandises, réalisé à l'aide d'un appareil d'expérience de marchandises selon l'une quelconque des revendications 1 à 8, le procédé comprenant :
obtenir un lien d'achat par le dispositif de numérisation (130) numérisant l'identifiant de marchandises de la marchandise affichée ; et
se connecter au système de plateforme de commerce électronique selon le lien d'achat, et afficher, via l'écran d'affichage (120), les informations sur la marchandise affichée avec les informations fournies par le système de plateforme de commerce électronique.

12. Procédé selon la revendication 11, **caractérisé en ce que** le procédé comprend en outre :
obtenir un lien vidéo de réalité virtuelle par le dispositif de numérisation (130) numérisant l'identifiant de marchandises de la marchandise affichée ; et
acquérir une image d'affichage de réalité virtuelle de la marchandise affichée selon le lien vidéo de réalité virtuelle, et afficher l'image d'affichage de réalité virtuelle à travers des lunettes de réalité virtuelle.

13. Procédé d'expérience de marchandises selon la revendication 11, **caractérisé en ce que** le procédé comprend en outre:
recevoir une opération d'utilisateur pour se connecter au système de plateforme de commerce électronique, et afficher, à travers l'écran d'affichage (120), les informations sur une marchandise choisie par l'utilisateur.

14. Procédé selon l'une quelconque des revendications 11 à 13, mis en oeuvre à l'aide d'un appareil d'expérience de marchandises selon l'une quelconque des revendications 3 ou 4, **caractérisé en ce que** le procédé comprend en outre :
réaliser une interaction vocale avec le centre de service client (40), via le dispositif de communication vocale (140) ; et
réaliser une interaction d'image avec le centre de service client (40), via la caméra (150) et/ou l'écran d'affichage (120).
